(19) Europäisches Patentamt
European Patent Office
Office européen des brevets

(11) EP 2 914 560 B1

(12) # EUROPÄISCHE PATENTSCHRIFT

(45) Veröffentlichungstag und Bekanntmachung des Hinweises auf die Patenterteilung:
**10.03.2021 Patentblatt 2021/10**

(21) Anmeldenummer: **13785448.5**

(22) Anmeldetag: **30.10.2013**

(51) Int Cl.:
***C04B 24/26*** *(2006.01)* ***C04B 7/52*** *(2006.01)*
***C04B 28/02*** *(2006.01)* ***C04B 24/18*** *(2006.01)*

(86) Internationale Anmeldenummer:
**PCT/EP2013/072698**

(87) Internationale Veröffentlichungsnummer:
**WO 2014/067991 (08.05.2014 Gazette 2014/19)**

(54) **VERWENDUNG EINES MAHLHILFSMITTELS FÜR ZEMENTKLINKER AUF BASIS VON POLYCARBOXYLATETHERN UND LIGNINSULFONATEN**

USE OF A GRINDING AID FOR CEMENT CLINKER BASED ON POLYCARBOXYLATE ETHERS AND LIGNIN SULFONATES

UTILISATION D'UN AGENT DE BROYAGE POUR CLINKER DE CIMENT À BASE D'ÉTHERS DE POLYCARBOXYLATE ET DE SULFONATES DE LIGNINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.11.2012 EP 12191242**

(43) Veröffentlichungstag der Anmeldung:
**09.09.2015 Patentblatt 2015/37**

(73) Patentinhaber: **Sika Technology AG**
**6340 Baar (CH)**

(72) Erfinder:
- **HONERT, Dieter**
  **69234 Dielheim (DE)**
- **HELLER, Thomas**
  **74909 Meckesheim (DE)**
- **MÜLLER, Thomas**
  **69115 Heidelberg (DE)**

(74) Vertreter: **Sika Patent Attorneys**
**c/o Sika Technology AG**
**Corp. IP Dept.**
**Tüffenwies 16**
**Postfach**
**8048 Zürich (CH)**

(56) Entgegenhaltungen:
**EP-A1- 2 298 710 EP-A1- 2 336 100**

- **MUELLER ET AL: "Mahlhilfen auf PCE-Basis - eine vielversprechende Technologie", 17. INTERNATIONALE BAUSTOFFTAGUNG IBAUSIL: 23.-26.09.2009; TAGUNGSBERICHTE BAND 1; 17. INTERNATIONALE BAUSTOFFTAGUNG IBAUSIL: 23.-26.09.2009; TAGUNGSBERICHTE BAND 1, FINGER-INSTITUT FÜR BAUSTOFFKUNDE, DE; WEIMAR, BUNDESREPUBLIK DEUTSCHLAND /, 1. Januar 2009 (2009-01-01), Seiten 87-95, XP008161084,**
- **HELLER T ET AL: "Cement additives based on PCE", ZKG INTERNATIONAL, BAUVERLAG BV., GETERSLOH, DE, Bd. 64, Nr. 2, 1. Februar 2011 (2011-02-01), Seiten 40-54, XP001561551, ISSN: 0949-0205**
- **DRESSEL D ET AL: "Modern grinding aids and their influence on the hydraulic properties of GBFS", ZKG INTERNATIONAL, BAUVERLAG BV., GETERSLOH, DE, Bd. 63cl, Nr. 2, 1. Februar 2010 (2010-02-01), Seiten 43-54, XP001555667, ISSN: 0949-0205**
- **DATABASE WPI Week 201279 Thomson Scientific, London, GB; AN 2012-N55165 & CN 102 603 227 A (DENG X) 25 July 2012 (2012-07-25)**
- **DATABASE WPI Week 200901 Thomson Scientific, London, GB; AN 2009-A01385 & CN 101 182 149 A (LI J) 21 May 2008 (2008-05-21)**
- **DATABASE WPI Week 200866 Thomson Scientific, London, GB; AN 2008-L17465 & CN 101 177 338 A (LIANG C) 14 May 2008 (2008-05-14)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 914 560 B1

## Beschreibung

Die Erfindung betrifft die Verwendung eines Zusatzmittels als Mahlhilfe bei der Zementherstellung.

## Technisches Gebiet

Zement ist ein anorganisches, fein gemahlenes, hydraulisch wirkendes Bindemittel für Mörtel und Beton. Bei Zugabe von Wasser erhärtet der sich bildende Zementleim durch Hydratation zu wasser- und raumbeständigem Zementstein. Zur Herstellung von Zement werden Zementrohstoffe gemahlen, um ein feines Pulver zu erhalten.

Es ist bekannt, bei der Zementmahlung sogenannte Mahlhilfsmittel zuzusetzen, die den Mahlvorgang verbessern können. Mahlhilfsmittel werden auch als Mahlhilfen bezeichnet. Als Mahlhilfen werden häufig Amine oder Glykole verwendet. Durch den Einsatz von Mahlhilfsmitteln kann z.B. die Energieausnutzung bei der Mahlung verbessert bzw. der Mahlvorgang beschleunigt und damit der Durchsatz erhöht werden. Andererseits können Mahlhilfsmittel im Zement zu einer Änderung bzw. Beeinträchtigung der Gebrauchseigenschaften des Zements führen, wenn er zur Herstellung von Mörtel oder Beton eingesetzt wird.

Betonzusatzmittel sind organische oder auch anorganische Zusätze zu Beton oder Mörtel, die durch chemische und/oder physikalische Wirkungen die Eigenschaften von Beton beeinflussen. Zum Beispiel können beim Frischbeton die Verarbeitbarkeit und das Abbindeverhalten mit Zusatzmitteln gesteuert bzw. verbessert werden, aber auch Festbetoneigenschaften wie Festigkeit, Dichtheit, Dauerhaftigkeit und Frost-/Taumittelbeständigkeit können mit Zusatzmitteln positiv beeinflusst werden. Je nach erzielter Eigenschaft werden solche Zusatzmittel in Betonverflüssiger (BV), Fließmittel (FM), Verzögerer (VZ), Beschleuniger (BE), Luftporenbildner (LP), Dichtungsmittel (DM), Einpreßhilfen (EH) und Stabilisierer (ST) eingeteilt. Die Betonzusatzmittel werden in der Regel während der Herstellung des Mörtels oder Betons zu der Mischung aus Zement, Wasser, Sand oder Kies und gegebenenfalls weiteren Zusatzstoffen gegeben.

Müller et al., 17. Internationale Baustofftagung ibausil, 23.-26.09.2009, Tagungsberichte Bd. 1, Finger-Institut für Baustoffkunde, Weimar, DE, S. 87-95, beschreibt Mahlhilfsmittel auf Polycarboxylatether-Basis für die Zementmahlung.

Heller et al., ZKG International, Bauverlag BV., Getersloh, DE, Bd. 64, Nr. 2-2011, S. 40-54, beschreibt Polycarboxylatether als Zementadditive.

In Dressel et al., ZKG International, Bauverlag BV., Getersloh, DE, Bd. 63cl, Nr. 2-2011, S. 43-54, wird die Wirkungsweise von Polycarboxylatethern bei der Mahlung von Hüttensand untersucht.

EP 2298710 A1 betrifft die Verwendung von Ligninsulfonat umfassenden Zusatzmitteln zur Verminderung des Aufschwimmens von Russ auf mineralischen Bindemitteln. Das Zusatzmittel kann auch Mahlhilfsmittel ausgewählt aus Glykolen, organischen Aminen, Ammoniumsalzen von organischen Aminen und Carbonsäuren und Polycarboxylatether-Kammpolymeren umfassen.

EP 2336100 A1 beschreibt Zusatzmittel für mineralische Bindemittel mit verringertem Braunverfärbungspotential umfassend ein Mahlhilfsmittel ausgewählt aus Glykolen, Monocarbonsäuren mit 1 bis 4 C-Atomen und Polycarboxylatether-Kammpolymeren sowie einen Verzögerer, die beim Mahlprozess von Zementklinker eingesetzt werden können.

CN 102603227 offenbart ein flüssiges Zementmahlhilfsmittel mit geringem Gehalt an Alkoholaminen, welches zusammengesetzt ist aus Molasse, Natriumligninsulfonat, Natriumformiat, Triethanolamin, Natriumalkylbenzolsulfonat, Silikon-Entschäumer und Polycarboxylsäure als Wasserreduzierer sowie Wasser.

## Darstellung der Erfindung

Aufgabe der Erfindung ist die Bereitstellung eines Mahlhilfsmittels für die Zementmahlung, das gleichzeitig auch eine verbesserte Verarbeitbarkeit von aus dem Zement gebildeten Mörtel oder Beton ergibt, d.h. auch als Zusatzmittel ähnlich wie ein Betonzusatzmittel wirkt. Auf diese Weise könnte z.B. die Menge an Betonzusatzmittel, die bei der Herstellung des Mörtels oder Betons notwendig ist, verringert werden. Die Zugabe des Zusatzmittels kann vor dem Mühleneingang, direkt in die Mühle oder nach dem Mühlenausgang erfolgen, bevorzugt am Mühleneingang.

Die Aufgabe wird überraschenderweise gelöst durch die Verwendung eines Zusatzmittels umfassend Polycarboxylatether und Ligninsulfonat als Mahlhilfsmittel bei der Zementmahlung zur Herstellung eines Zements, wobei das Mahlhilfsmittel zu einem veringerten Fließmittelanspruch bei dem aus dem Zement hergestellten Mörtel oder Beton führt und das Zusatzmittel ein wässriges Zusatzmittel ist und das Gewichtsverhältnis von Ligninsulfonat und Polycarboxylatether im Bereich von 1,1/1 bis 3/1 liegt. Bei der Zementmahlung handelt es sich insbesondere um eine Trockenmahlung, die gewöhnlich in einer Mühle durchgeführt wird. Durch die Zugabe des Zusatzmittels zur Zementmahlung wird überraschenderweise eine höhere Effizienz als bei Zugabe zur Mörtel- bzw. Betonmischung erzielt.

Durch den Einsatz des Zusatzmittels als Mahlhilfe werden die Eigenschaften des Zements und von daraus gebildetem Mörtel oder Beton verbessert, speziell bei der Verwendung von Flugaschen und Gesteinsmehl im Zement,

so dass die Mahlhilfe auch als sogenannter Improver wirkt. Überraschenderweise wurde gefunden, dass nach Anwendung des Zementzusatzmittels der Zement eine deutlich erhöhte Robustheit gegenüber natürlichen Schwankungen der Zementqualität, die sich auf die Eigenschaften im Frischmörtel oder Frischbeton auswirken, aufweist. Schwankungen in der Zementqualität treten beispielsweise auf, wenn während der laufenden Produktion eines Zementes vom Typ CEM II/B-V die Flugasche ausgetauscht werden muss oder wenn während der Produktion eines CEM II/B-LL die Qualität des zugesetzten Kalksteins schwankt. Im Folgenden wird die Erfindung näher erläutert.

Die Verwendung des erfindungsgemäßen Mahlhilfsmittels führt überraschenderweise zu einer verbesserten Verarbeitbarkeit von aus dem Zement hergestellten Mörtel oder Beton. Durch die Zugabe des Zusatzmittels umfassend Polycarboxylatether und Ligninsulfonat als Mahlhilfsmittel kann erstaunlicherweise die gewünschte Eigenschaft gezielt beeinflusst werden, ohne dabei eine negative Wirkung zu verursachen. Der Wasseranspruch kann gesenkt werden, so dass die benötigte Menge an Fließmittel für Mörtel oder Beton deutlich geringer sein kann. Auch das Rücksteifen des Betons oder Mörtels ist deutlich geringer. Die Verbesserung des Ansteifverhaltens über den Verarbeitungszeitraums ermöglicht eine geringere Dosierung von Betonzusatzmittel. Das erfindungsgemäß als Mahlhilfsmittel verwendete wässrige Zusatzmittel umfassend Polycarboxylatether und Ligninsulfonat wirkt insofern auch als Fließmittel.

Als Mahlhilfsmittel wird bei der Zementmahlung erfindungsgemäß ein wässriges Zusatzmittel umfassend Polycarboxylatether und Ligninsulfonat verwendet. Hierzu können gegebenenfalls auch die nachstehend aufgeführten Verbindungen, Mahlhilfsmittel und/oder Additive zugegeben werden.

Das Zusatzmittel umfassend Polycarboxylatether und Ligninsulfonat ist ein wässriges Zusatzmittel. Hierfür wird Polycarboxylatether und Ligninsulfonat in Wasser gelöst, dispergiert oder aufgeschlämmt, so dass man eine wässrige Lösung, Dispersion oder Aufschlämmung erhält. Das Zusatzmittel ist bevorzugt eine wässrige Lösung.

Das Zusatzmittel umfasst eine Mischung aus Polycarboxylatether und Ligninsulfonat. Es können auch ein oder mehrere Polycarboxylatether und ein oder mehrere Ligninsulfonate eingesetzt werden, die sich z.B. im Molekulargewicht unterscheiden.

Polycarboxylatether und Ligninsulfonate sind dem Fachmann allgemein bekannt und auch im Handel erhältlich. Im folgenden werden Beispiele für geeignete und bevorzugte Ausführungsformen für diese Verbindungsklassen näher erläutert.

Der Polycarboxylatether ist insbesondere ein Kammpolymer, welches über einen Polycarboxylatrückgrat und Polyetherseitenketten verfügt, wobei die Polyetherseitenketten bevorzugt über Ester-, Ether- und/oder Amidgruppen an das Polycarboxylatrückgrat gebunden sind.

Das Kammpolymer umfasst bevorzugt folgende Teilstruktureinheiten oder besteht daraus:

a) a Molanteile einer Teilstruktureinheit **S1** der Formel (I)

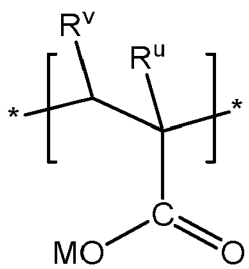

(I)

b) b Molanteile einer Teilstruktureinheit **S2** der Formel (II)

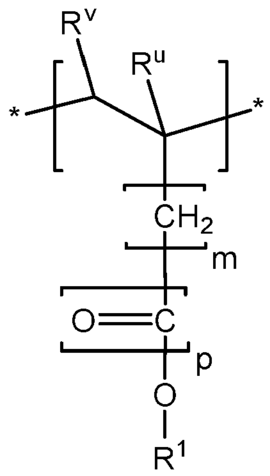

(II)

c) c Molanteile einer Teilstruktureinheit **S3** der Formel (III)

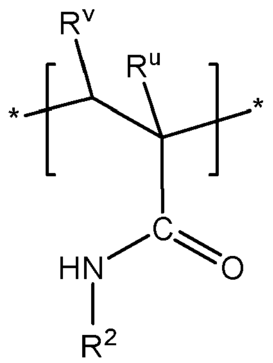

(III)

d) d Molanteile einer Teilstruktureinheit **S4** der Formel (IV)

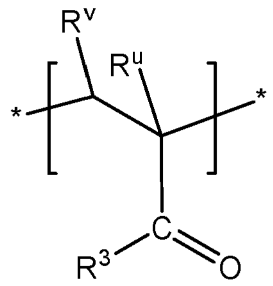

(IV)

wobei

> M unabhängig voneinander $H^+$, ein Alkalimetallion, Erdalkalimetallion, ein zwei oder dreiwertiges Metallion, ein Ammoniumion oder eine organische Ammoniumgruppe darstellt,
> jedes $R^u$ unabhängig von den anderen für Wasserstoff oder eine Methylgruppe steht, jedes $R^v$ unabhängig von den anderen für Wasserstoff oder COOM steht,
> m = 0, 1 oder 2 ist,
> p = 0 oder 1 ist,
> $R^1$ und $R^2$ unabhängig voneinander für eine $C_1$- bis $C_{20}$-Alkylgruppe, -Cycloalkylgruppe, -Alkylarylgruppe oder für $-[AO]_n-R^4$ steht,
>
> > wobei A = $C_2$- bis $C_4$-Alkylen, $R^4$ für H, eine $C_1$- bis $C_{20}$-Alkylgruppe, -Cyclohexylgruppe oder -Alkylarylgruppe steht,
> > und n = 2 - 250,

$R^3$ unabhängig voneinander für $NH_2$, $-NR^5R^6$, $-OR^7NR^8R^9$ stehen,

wobei $R^5$ und $R^6$ unabhängig voneinander für

eine $C_1$- bis $C_{20}$-Alkylgruppe, -Cycloalkylgruppe, -Alkylaryl¬gruppe oder -Arylgruppe stehen, oder für eine Hydroxyalkylgruppe oder für eine Acetoxyethyl- ($CH_3$-CO-O-$CH_2$-$CH_2$-) oder eine Hydroxy-isopropyl- (HO-CH($CH_3$)-$CH_2$-) oder eine Acetoxyisopropylgruppe ($CH_3$-CO-O-CH($CH_3$)-$CH_2$-) stehen;

oder $R^5$ und $R^6$ bilden zusammen einen Ring, von dem der Stickstoff ein Teil ist, um einen Morpholin- oder Imidazolinring aufzubauen;
$R^7$ eine $C_2$ -$C_4$-Alkylengruppe ist,
$R^8$ und $R^9$ je unabhängig voneinander eine $C_1$- bis $C_{20}$-Alkylgruppe, -Cycloalkylgruppe, -Alkylarygruppe, -Arylgruppe oder eine Hydroxyalkylgruppe darstellen,

und wobei a, b, c und d Molanteile der jeweiligen Teilstruktureinheiten **S1, S2, S3** und **S4** darstellen, mit

$$a/b/c/d = (0{,}1 - 0{,}9) / (0{,}1 - 0{,}9) / (0 - 0{,}8) / (0 - 0{,}8),$$

$$\text{insbesondere } a/b/c/d = (0{,}3 - 0{,}9) / (0{,}1 - 0{,}7) / (0 - 0{,}6) / (0 - 0{,}4),$$

$$\text{bevorzugt } a/b/c/d = (0{,}5 - 0{,}8) / (0{,}2 - 0{,}4) / (0{,}001 - 0{,}005) / 0$$

und mit der Maßgabe dass a + b + c + d = 1 ist.

Die Abfolge der Teilstruktureinheiten **S1, S2, S3** und **S4** kann alternierend, blockartig oder zufällig sein. Prinzipiell ist es auch möglich, dass zusätzlich zu den Teilstruktureinheiten **S1, S2, S3** und **S4** weitere Struktureinheiten vorliegen.

Bevorzugt weisen die Teilstruktureinheiten **S1, S2, S3,** und **S4** zusammen einen Gewichtsanteil von wenigstens 50 Gew.-%, insbesondere wenigstens 90 Gew.-%, ganz besonders bevorzugt wenigstens 95 Gew.-%, am Gesamtsgewicht des Kammpolymers auf.

Gemäß einer weiteren vorteilhaften Ausführungsform ist das Kammpolymer insbesondere frei von aromatischen Verbindungen und/oder aromatischen Struktureinheiten.

Ein gewichtsgemitteltes Molekulargewicht ($M_w$) des Kammpolymers beträgt insbesondere 5'000 - 150'000 g/mol, im Speziellen 10'000 - 100'000 g/mol.

Die Herstellung der Kammpolymere ist dem Fachmann an sich bekannt und kann beispielsweise durch radikalische Polymerisation der entsprechenden Monomere der Formel ($I_m$), ($II_m$), ($III_m$) bzw. ($IV_m$) erfolgen, was zu einem Kammpolymer **KP** mit den Teilsstruktureinheiten **S1, S2, S3** und **S4** führt. Die Reste $R^u$, $R^v$, $R^1$, $R^2$, $R^3$, M, m und p sind dabei wie vorstehend beschreiben definiert.

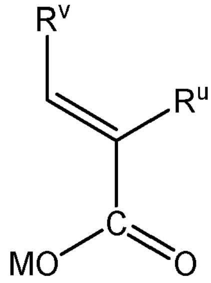
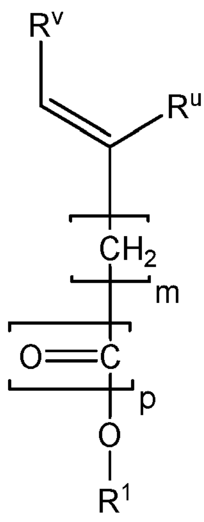
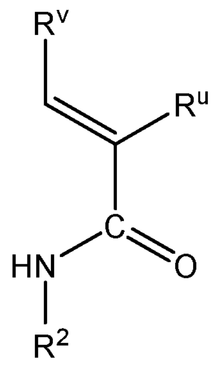
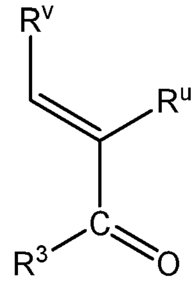

$(I_m)$ $(II_m)$ $(III_m)$ $(IV_m)$

Ebenfalls möglich ist die Herstellung der Kammpolymere durch polymer-analoge Umsetzung einer Polycarbonsäure der Formel (V).

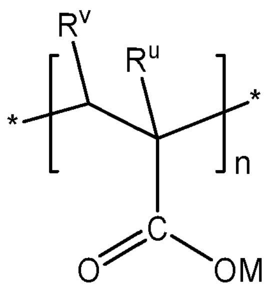

(V).

Bei der polymer-analogen Umsetzung wird die Polycarbonsäure der Formel (V) mit den korrespondierenden Alkoholen oder Aminen (z.B. $HO-R^1$, $H_2N-R^2$, $H-R^3$) verestert bzw. amidiert und dann allenfalls neutralisiert oder teilneutralisiert (je nach Art des Rests M z.B. mit Metallhydroxiden oder Ammoniak). Details zur polymer-analogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen den Beispielen. In einer Abart davon, wie sie in EP 1 348 729 A1 auf Seite 3 bis Seite 5 sowie in dessen Beispielen beschrieben sind, kann das Kammpolymer in festem Aggregatszustand hergestellt werden. Die Offenbarung dieser genannten Patentschriften wird hiermit insbesondere durch Bezugnahme eingeschlossen. Die Herstellung durch polymeranloge Umsetzung ist bevorzugt.

Entsprechende Kammpolymere werden auch von Sika Schweiz AG unter der Handelsnamenreihe ViscoCrete® kommerziell vertrieben.

Ganz besonders geeignet sind Kammpolymere wobei

a) der Rest $R^v$ für Wasserstoff steht,

b) der Rest $R^u$ für eine Methylgruppe oder für eine Mischung aus einer Methylgruppe und Wasserstoff steht. In letzterem Fall, beträgt ein Molverhältnis der Methylgruppe zum Wasserstoff insbesondere 25:75 - 75:25, insbesondere 40:60 - 60:40.

c) m = 0 ist,

d) p = 1 ist,

e) $R^1$, jeweils unabhängig voneinander, für $-[AO]_n-R^4$ mit n = 20 - 70 und A = $C_2$-Alkylen steht,

f) $R^2$, jeweils unabhängig voneinander, für $-[AO]_n-R^4$, wobei A insbesondere für eine Mischung aus $C_2$- und $C_3$-Alkylen steht, $R_4$ mit Vorteil eine Methylgruppe darstellt und insbesondere n = 20 - 70 ist. Ein gewichtsgemitteltes Molekulargewicht der Gruppe $-[AO]_n-R^4$ beträgt dabei mit Vorteil 1'000 - 3'000 g/mol. Ein Molverhältnis der $C_2$-Alkyleneinheiten zu den $C_3$-Alkyleneinheiten beträgt insbesondere 25:75 - 75:25, insbesondere 40:60 - 60:40.

g) $R^4$ eine Methylgruppe darstellt und/oder

h)

$$a/b/c/d = (0,5 - 0,8) / (0,2 - 0,4) / (0,001 - 0,005) / 0$$

Ligninsulfonate können z.B. insbesondere auf Basis von ligninhaltigem Cellulosematerial, wie z.B. Holz, Faserpflanzen oder Altpapier, erhalten werden. Lignin kann von der Cellulose abgetrennt werden, die z.B. für die Papierherstellung verwendet wird ("Pulping"-Verfahren). Das Lingnin wird chemisch aufgeschlossen und sulfoniert, um es wasserlöslicher zu machen, wobei Ligninsulfonate als Rohprodukt erhalten werden. Je nach Verwendungszweck können verschiedene Verfahren zur Reinigung oder Modifizierung durchgeführt werden. Ein Beispiel für ein Modifikationsreaktion ist eine Kationenaustauschreaktion.

Technische Ligninsulfonate können je nach Reinigungsgrad und erfolgter Modifikation gegebenenfalls noch Anteile an anorganischen Substanzen, z.B. anorganischen Salzen, und/oder organischen Substanzen, z.B. Zucker, Essigsäure oder Furfurol, in unterschiedlichen Mengen enthalten. Solche noch Fremdstoffe enthaltende technischen Ligninsulfonate können ebenfalls verwendet werden.

Ligninsulfonate sind Polymere mit einer komplexen verzweigten Struktur. Je nach Aufschlussbedingungen können sie einen variierenden Gehalt an Sulfosäuregruppen und eine breite Molekularmassenverteilung aufweisen, z.B. zwischen 1000 und $10^5$. Das Gewichtsmittel des Molekulargewichts kann ebenfalls in breiten Bereichen schwanken. Die Ligninsulfonate können z.B. ein Gewichtsmittel des Molekulargewichts (Mw) im Bereich von 5000 bis 20000, bevorzugt 8000 bis 20000 g/mol aufweisen. Es sind aber auch Ligninsulfonate mit einem höheren oder niedrigeren Mw geeignet.

Die Polymerstruktur der Ligninsulfonate basiert im wesentlichen auf den Monomereinheiten p-Cumarylalkohol, Coniferylalkohol und Sinapylalkohol, deren Strukturformeln nachstehend aufgeführt sind.

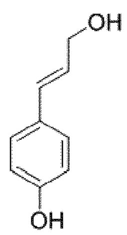
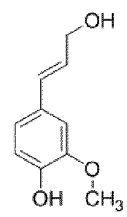
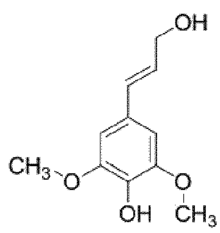

Zur bloßen Veranschaulichung ist nachfolgend schematisch ein Beispiel für einen Ausschnitt aus einer möglichen Polymerstruktur von Ligninsulfonaten ohne Gegenion dargestellt, die die Erfindung in keiner Weise einschränken soll.

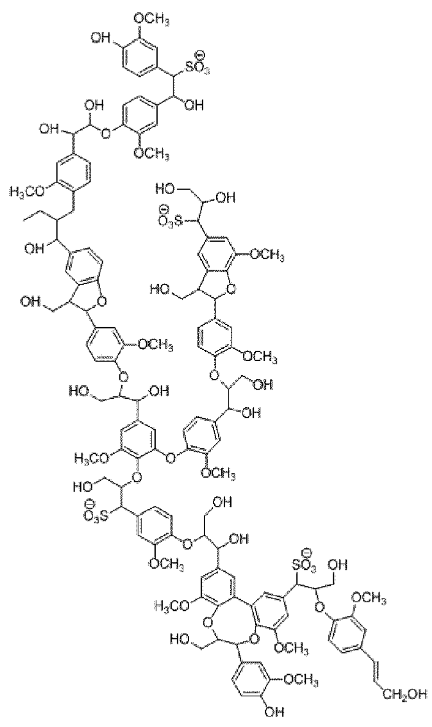

Als Gegenionen für die Sulfonatgruppe eignen sich alle üblichen, die in der Technik bekannt sind. Beispiele für Kationen der Lignisulfonate sind Natrium, Ammonium, Magnesium oder Calcium. Das Ligninsulfonat kann auch verschiedene Kationen enthalten.

Die gemeinsame Menge an Polycarboxylatether und Ligninsulfonat in dem wässrigen Zusatzmittel kann in breiten Bereichen variieren, liegt aber z.B. geeigneterweise im Bereich von 10 bis 80 Gew.-%, bevorzugt im Bereich von 20 bis 60 Gew.-%.

Die Menge an eingesetztem Zusatzmittel bzw. Mahlhilfsmittel bezogen auf Zement kann ebenfalls in breitem Umfang variieren und hängt z.B. von der Art der zu vermahlenden Rohstoffe ab. Die Menge an Mahlhilfsmittel kann z.B. so gewählt werden, dass in dem hergestellten Zement die Menge an Polycarboxylatether und Ligninsulfonat im Bereich von 0,01 bis 1,0 Gew.-%, bevorzugt im Bereich von 0,015 bis 0,5 Gew.-%, bevorzugter 0,05 bis 0,35 Gew.-%, bezogen auf das Gesamtgewicht des Zements, beträgt.

Das Zusatzmittel umfasst Polycarboxylatether und Ligninsulfonat, wobei das Gewichtsverhältnis von Ligninsulfonat zu Polycarboxylatether in breiten Bereichen gewählt werden kann. Das Gewichtsverhältnis von Ligninsulfonat zu Polycarboxylatether ist mindestens 1,1/1 und liegt im Bereich von 1,1/1 bis 3/1, bevorzugt von 1,2/1 bis 2,5/1 und besonders bevorzugt von 1,3/1 bis 2/1, wobei das Zusatzmittel bevorzugt in einer solchen Menge eingesetzt wird, dass die vorstehend angegebene Menge an Polycarboxylatether und Ligninsulfonat, bezogen auf das Gesamtgewicht des Zements, erhalten wird.

Das wässrige Zusatzmittel kann ferner gegebenenfalls eine oder mehrere Verbindungen ausgewählt aus der Gruppe bestehend aus Gluconaten, Polyacrylsäure, Polymethacrylsäure oder deren Salze, Huminsäuren, $\alpha$-Hydroxycarbonsäuren, Sacchariden und Polysacchariden umfassen. In einer bevorzugten Ausführungsform enthält das wässrige Zusatzmittel ein oder mehrere Gluconate.

Bevorzugte wässrige Zusatzmittel sind solche, die Polycarboxylatether und Ligninsulfonat oder Polycarboxylatether, Ligninsulfonat und Gluconat enthalten.

Das wässrige Zusatzmittel kann ferner auch bekannte Mahlhilfen wie z.B. verschiedene Glykole, z.B. Monoethylenglykol, Diethylenglykol, Propylenglykol oder Polypropylenglykol, und andere oberflächenaktive Substanzen umfassen.

Zemente sind zusammengesetzt aus Hauptbestandteilen, gewöhnlich zusätzlich aus geringen Mengen an Calciumsulfat (Gips und/oder Halbhydrat und/oder Anhydrit) und gegebenenfalls aus Nebenbestandteilen und/oder Zementzusätzen wie Mahlhilfsmittel. Hauptbestandteile werden in Mengen von mehr als 5 Massen-% eingesetzt. Bei den Hauptbestandteilen kann es sich um Portlandzementklinker, auch als Klinker bezeichnet, Hüttensand, natürliche oder künstliche Puzzolane, Flugaschen, z.B. kieselsäure- oder kalkreiche Flugaschen, gebrannten Schiefer, Kalkstein und/oder Silicastaub handeln. Als Nebenbestandteil können die Zemente bis zu 5 Massen-% fein zerkleinerte anorganische, mineralische Stoffe enthalten, die aus der Klinkerproduktion, z.B. Rohmehl, stammen oder den anderen Hauptbestandteilen entsprechen.

Bei dem Zement, zu dessen Herstellung das erfindungsgemäß verwendete Mahlhilfsmittel eingesetzt wird, kann es sich um jeden üblichen Zement handeln, beispielsweise einen gemäß der fünf Hauptzementarten nach DIN EN 197-1: nämlich Portlandzement (CEM I), Portlandkompositzemente (CEM II), Hochofenzement (CEM III), Puzzolanzement (CEM IV) und Kompositzement (CEM V). Diese Hauptzementarten werden entsprechend der Zugabemenge ihrer Hauptbestandteile in weitere 27 Zementarten unterteilt, die dem Fachmann bekannt bzw. in DIN EN 197-1 aufgeführt sind. Natürlich eignen sich auch alle Zemente, die gemäß einer anderen Norm produziert werden, z.B. gemäß ASTM-Norm oder Indian Standard. Sofern hier auf Zementsorten gemäß DIN-Norm Bezug genommen wird, bezieht sich dies naturgemäß auch auf entsprechende Zementzusammensetzungen, die nach einer anderen Zementnorm produziert werden.

Ein bevorzugter Zement umfasst z.B. eine Mischung von mindestens einem hydraulischen Pulver und einem oder mehreren Pulvern ausgewählt aus nichthydraulischem, latent hydraulischem und puzzolanischem Pulver. Vorzugsweise umfasst der Zement puzzolanische Klinkerersatzstoffe, z.B. Flugasche wie Steinkohlenflugasche oder Braunkohlenflugasche, oder nichthydraulische Klinkerersatzstoffe, wie z.B. Kalkstein.

Es ist besonders bevorzugt, wenn der Zement Flugasche, wie Steinkohlenflugasche oder Braunkohlenflugasche, und/oder Gesteinsmehl umfasst. Bevorzugt handelt es bei dem Zement um einen CEM II Zement. Besonders bevorzugt sind die Zemente CEM II/B-V, CEM II/B-L, CEM II/B-LL und CEM II/B-M.

Bei der Verwendung von puzzolanischen Klinkerersatzstoffen wie Flugasche oder nichthydraulischen Klinkerersatzstoffen wie Kalkstein in Zementsorten, die z.B. in der Zementsorte CEM II B-M (V-LL) 42,5 N eingesetzt werden, konnte z.B. das gewünschte Verhalten bezüglich Wasseranspruch, Fließmittelanspruch und Ansteifverhalten über die Zeit nicht erreicht werden. Die gewünschten Eigenschaften konnten aber bei diesen Zementsorten erstaunlicherweise erreicht werden, wenn das erfindungsgemäß eingesetzte Mahlhilfsmittel verwendet wurde.

Bei der Herstellung eines Zements erfolgt eine Zementmahlung. Die Zementmahlung dient insbesondere dazu, aus dem Klinker und gegebenenfalls den weiteren Hauptbestandteilen ein reaktionsfähiges Produkt zu bilden. Hierzu wird der Klinker allein, gegebenenfalls mit Nebenbestandteilen (in der Regel maximal bis zu 5 Massen-%) oder mit

weiteren Hauptbestandteilen gemeinsam feingemahlen. Zur Regelung des Erstarrens wird dem Mahlgut üblicherweise Gipsstein oder ein Gips-Anhydrit-Gemisch zugesetzt. Bei der gemeinsamen Mahlung oder Feinmahlung lassen sich die Korngrößenverteilungen der einzelnen Komponenten nicht getrennt beeinflussen. Für eine optimale Zementherstellung kann aufgrund der unterschiedlichen Mahlbarkeiten der Zementrohstoffe daher auch ein getrenntes Mahlen und anschließendes Mischen sinnvoll sein.

Bei einem Verfahren zur Herstellung eines Zements werden mindestens ein oder bevorzugt alle Zementhauptbestandteile in Anwesenheit eines Zusatzmittels umfassend Polycarboxylatether und Ligninsulfonat, das ein wässriges Zusatzmittel ist, als Mahlhilfsmittel gemahlen, wobei der mindestens eine Hauptbestandteil bevorzugt den Klinker umfasst. In einer besonders bevorzugten Ausführungsform umfasst die zu vermahlende Zementmischung Flugasche und/oder Gesteinsmehl. Bei der Zementmahlung handelt es sich insbesondere um eine Trockenmahlung. Nach der Mahlung liegt der Zement als Pulver vor.

Zementnebenbestandteile, Calciumsulfat oder weitere Zementzusätze können vor oder nach der Mahlung mit dem Mahlhilfsmittel zugemischt werden, wobei sie vorzugsweise vor der Mahlung zugesetzt werden. Sofern nicht alle Zementhauptbestandteile gemeinsam in Anwesenheit des erfindungsgemäß verwendeten Mahlhilfsmittels gemahlen werden, können die gesondert gemahlenen Zementhauptbestandteile danach zugemischt werden. Natürlich können auch solche gesondert gemahlenen Zementhauptbestandteile ebenfalls in Anwesenheit des erfindungsgemäß verwendeten Mahlhilfsmittels gemahlen werden.

Die Zementmahlung erfolgt gewöhnlich in Mühlen, wobei Kugelmühlen, Gutbett-Walzmühlen oder Vertikal-Walzmühlen bevorzugt sind.

Die beim Verfahren verwendeten geeigneten oder bevorzugten wässrigen Zusatzmittel und der geeignete bzw. bevorzugte Zement wurden bereits vorstehend beschrieben. Der Zement und das wässrige Zusatzmittel können weitere auf dem Gebiet der Zement- und Betonzusatzmittel übliche Additive enthalten. Beispiele sind Tenside, Dispergierhilfsmittel, Netzmittel, Verdickungsmittel, organische Lösungsmittel, Cosolventien, Entschäumer, Carbonsäuren, Konservierungsmittel und Stabilisierungsmittel.

Durch das Verfahren wird ein Zement erhalten, bei dem das Mahlhilfsmittel umfassend einen Polycarboxylatether und ein Ligninsulfonat in dem hergestellten Zement zu einer verbesserten Verarbeitbarkeit des aus dem Zement hergestellten Betons oder Mörtels führt. Insbesondere ergeben sich ein verbessertes Ansteifverhalten, ein verringerter Wasseranspruch und/oder ein verringerter Fließmittelanspruch bei dem aus dem Zement hergestellten Mörtel oder Beton.

**Beispiele**

Im Folgenden werden einige Beispiele aufgeführt, welche die Erfindung weiter veranschaulichen, den Umfang der Erfindung aber in keiner Weise beschränken sollen. Sofern nicht anders angegeben, beziehen sich alle Anteile und Prozentsätze auf das Gewicht.

Zementzusa mmensetzung:

| | **Zement 1** | **Zement 2** |
|---|---|---|
| **Klinker** | 65,0 % | 65,0 % |
| **Sulfatträger** | 5,0 % | 5,0 % |
| **Flugasche 1** | 30,0 % | --- |
| **Flugasche 2** | --- | 30,0 % |

Zusammensetzung der Bestandteile:

| | **Klinker** |
|---|---|
| LOI 950 °C | 0,13% |
| $SiO_2$ | 20,5% |

(fortgesetzt)

| | Klinker |
|---|---|
| $Al_2O_3$ | 6,01% |
| $TiO_2$ | 0,26% |
| MnO | 0,04% |
| $Fe_2O_3$ | 3,91% |
| CaO | 64,5% |
| MgO | 1,74% |
| $K_2O$ | 1,31% |
| $Na_2O$ | 0,22% |
| $SO_3$ | 1,04% |
| $P_2O_5$ | 0,14% |

| | Flugasche 1 | Flugasche 2 |
|---|---|---|
| LOI 1050 °C | 2,26% | 4,67% |
| $SiO_2$ | 51,0% | 50,1% |
| $Al_2O_3$ | 24,1% | 26,9% |
| $TiO_2$ | 0,99% | 1,52% |
| MnO | 0,11% | 0,05% |
| $Fe_2O_3$ | 9,71% | 4,74% |
| CaO | 5,31% | 7,11% |
| MgO | 2,02% | 1,68% |
| $K_2O$ | 3,03% | 0,81% |
| $Na_2O$ | 0,49% | 0,19% |
| $SO_3$ | 0,59% | 0,42% |
| $P_2O_5$ | 0,13% | 1,32% |

## Mahlung der Zemente

- Laborkugelmühle TTS 100
- Mahlung von jeweils 20 kg Zement
- Temperatur in Mühle: 100°C
- Feinheit der Zemente: Blaine: 4100 $cm^2/g \pm 100\ cm^2/g$ Siebrückstand (32$\mu$m-Sieb): 9,5% $\pm$ 1,0%

| | Mahlung 1 | Mahlung 2 | Mahlung 3 | Mahlung 4 | Mahlung 5 | Mahlung 6 |
|---|---|---|---|---|---|---|
| | Zement 1 | Zement 1 | Zement 1 | Zement 2 | Zement 2 | Zement 2 |
| Mahldauer | 60 min | 53 min | 55 min | 60 min | 54 min | 54 min |
| Zementadditiv | --- | ZA 1 | ZA 2 | --- | ZA 1 | ZA 3 |

Zugabemenge der Zementadditive: 0,1% - 0,3%

| Zusammensetzung in % | ZA 1 | ZA2 | ZA 3 |
|---|---|---|---|

(fortgesetzt)

| | | | |
|---|---|---|---|
| Polycarboxylatether* Typ 1 (wässrige Lösung) | 30 | | 15 |
| Polycarboxylatether* Typ 2 (wässrige Lösung) | | 20 | 10 |
| Ligninsulfonat* (wässrige Lösung) | 40 | 40 | 35 |
| Entschäumer | 0,5 | 0,5 | 0,5 |
| Wasser | 29,5 | 39,5 | 39,5 |

*werden auch in Formulierung von Betonzusatzmittelprodukten der Firma Sika verwendet

Zum Erreichen der Zielfeinheit wurde bei den Mahlungen 2-6 eine geringere Mahldauer benötigt als bei Mahlung 1. Dies bedeutet, dass die Mahleffizienz durch die zugegebenen Produkte gesteigert wird.

**Bestimmung des Fließmittelanspruches der Zemente am Mörtel und Konsistenzverlauf**

Zu einer vorgegebenen Mörtelzusammensetzung wird während des Anmischprozesses so viel Fließmittel zugesetzt, dass ein vorher definiertes Fließmaß (Ziel: 250 mm ± 5 mm) erzielt wird. Dieses Fließmaß wird als "Fließmaß 5 min" bezeichnet und in mm angegeben. Die zum Erreichen des Fließmaßes benötigte Dosierung an Fließmittel wird als Fließmittelanspruch bezeichnet und in Gew.% von Zement angegeben. Der Konsistenzverlauf wird bestimmt, indem nach 30, 60 und 90 min das Fließmaß erneut gemessen wird.

Als Fließmittel wurde ein Standardfließmittel der Firma Sika verwendet.

| | | Mahlung 1 | Mahlung 2 | Mahlung 3 |
|---|---|---|---|---|
| Fließmittelanspruch | | 0,62% | 0,42% | 0,41% |
| Fließmaß | 5 min | 253 mm | 249 mm | 251 mm |
| | 30 min | 214 mm | 226 mm | 233 mm |
| | 60 min | 198 mm | 221 mm | 215 mm |
| | 90 min | 183 mm | 220 mm | 207 mm |

| | | Mahlung 4 | Mahlung 5 | Mahlung 6 |
|---|---|---|---|---|
| Fließmittelanspruch | | 0,79% | 0,45% | 0,53% |
| Fließmaß | 5 min | 250 mm | 252 mm | 251 mm |
| | 30 min | 229 mm | 232 mm | 221 mm |
| | 60 min | 211 mm | 224 mm | 214 mm |
| | 90 min | 192 mm | 218 mm | 210 mm |

Durch Zugabe der Zementadditive konnte sowohl der Fließmittelanspruch verringert werden. Überraschenderweise wurde gleichzeitig auch der Konsistenzverlauf verbessert.

**Patentansprüche**

1. Verwendung eines Zusatzmittels umfassend Polycarboxylatether und Ligninsulfonat als Mahlhilfsmittel bei der Zementmahlung zur Herstellung eines Zements, wobei das Mahlhilfsmittel zu einem verringerten Fließmittelanspruch bei dem aus dem Zement hergestellten Mörtel oder Beton führt und das Zusatzmittel ein wässriges Zusatzmittel ist und das Gewichtsverhältnis von Ligninsulfonat zu Polycarboxylatether im Bereich von 1,1/1 bis 3/1 liegt.

2. Verwendung nach Anspruch 1, **dadurch gekennzeichnet, dass** der Zement Flugasche und/oder Gesteinsmehl

umfasst.

3. Verwendung nach Anspruch 1 oder 2, **dadurch gekennzeichnet, dass** das Zusatzmittel, bevorzugt das wässrige Zusatzmittel, ferner eine oder mehrere Verbindungen ausgewählt aus der Gruppe bestehend aus Gluconaten, Polyacrylsäure oder deren Salzen, Polymethacrylsäure oder deren Salzen, Huminsäuren, α-Hydroxycarbonsäuren, Sacchariden und Polysacchariden umfasst.

4. Verwendung nach irgendeinem der Ansprüche 1 bis 3, **dadurch gekennzeichnet, dass** das Zusatzmittel ein oder mehrere Gluconate umfasst.

5. Verwendung nach irgendeinem der Ansprüche 1 bis 4, **dadurch gekennzeichnet, dass** das Zusatzmittel ferner eine oder mehrere Verbindungen ausgewählt aus Glykolen und oberflächenaktiven Substanzen umfasst.

6. Verwendung nach irgendeinem der Ansprüche 1 bis 5, **dadurch gekennzeichnet, dass** der Anteil von Polycarboxylatether und Ligninsulfonat in dem wässrigen Zusatzmittel im Bereich von 10 bis 80 Gew.-% liegt.

7. Verwendung nach irgendeinem der Ansprüche 1 bis 6, **dadurch gekennzeichnet, dass** der Zement eine Mischung von mindestens einem hydraulischen Pulver und einem oder mehreren Pulvern ausgewählt aus nichthydraulischem, latent hydraulischem und puzzolanischem Pulver ist.

8. Verwendung nach irgendeinem der Ansprüche 1 bis 7, **dadurch gekennzeichnet, dass** der Zement ein puzzolanisches Pulver oder ein nichthydraulisches Pulver umfasst.

9. Verwendung nach irgendeinem der Ansprüche 1 bis 8, **dadurch gekennzeichnet, dass** der Zement eine Zementsorte CEM II ist.

## Claims

1. Use of an admixture comprising polycarboxylate ether and lignosulphonate as grinding aid in cement milling to produce a cement, wherein the grinding aid leads to a reduced plasticizer requirement in the mortar or concrete produced from the cement and the admixture is an aqueous admixture and the weight ratio of lignosulphonate to polycarboxylate ether is in the range from 1.1/1 to 3/1.

2. Use according to Claim 1, **characterized in that** the cement comprises fly ash and/or ground rock.

3. Use according to Claim 1 or 2, **characterized in that** the admixture, preferably the aqueous admixture, further comprises one or more compounds selected from the group consisting of gluconates, polyacrylic acid or salts thereof, polymethacrylic acid or salts thereof, humic acids, α-hydroxycarboxylic acids, saccharides and polysaccharides.

4. Use according to any of Claims 1 to 3, **characterized in that** the admixture comprises one or more gluconates.

5. Use according to any of Claims 1 to 4, **characterized in that** the admixture further comprises one or more compounds selected from among glycols and surface-active substances.

6. Use according to any of Claims 1 to 5, **characterized in that** the proportion of polycarboxylate ether and lignosulphonate in the aqueous admixture is in the range from 10 to 80% by weight.

7. Use according to any of Claims 1 to 6, **characterized in that** the cement is a mixture of at least one hydraulic powder and one or more powders selected from among nonhydraulic, latently hydraulic and pozzolanic powder.

8. Use according to any of Claims 1 to 7, **characterized in that** the cement comprises a pozzolanic powder or a nonhydraulic powder.

9. Use according to any of Claims 1 to 8, **characterized in that** the cement is a CEM II cement grade.

## Revendications

1. Utilisation d'un additif comprenant un polycarboxylatéther et un lignosulfonate en tant qu'adjuvant de broyage lors du broyage de ciment pour la préparation d'un ciment, l'adjuvant de broyage conduisant à un besoin réduit en agent d'écoulement dans le mortier ou le béton préparé à partir du ciment et l'additif étant un additif aqueux et le rapport pondéral de lignosulfonate sur polycarboxylatéther se situant dans la plage de 1,1/1 à 3/1.

2. Utilisation selon la revendication 1, **caractérisée** ce que le ciment contient des cendres volantes et/ou de la farine de pierre.

3. Utilisation selon la revendication 1 ou 2, **caractérisée en ce que** l'additif, préférablement l'additif aqueux, comprend en outre un ou plusieurs composés choisis dans le groupe constitué par des gluconates, des poly(acide acrylique) ou leurs sels, des poly(acide méthacrylique) ou leurs sels, des acides humiques, des acides $\alpha$-hydroxycarboxyliques, des saccharides et des polysaccharides.

4. Utilisation selon l'une quelconque des revendications 1 à 3, **caractérisée en ce que** l'additif comprend un ou plusieurs gluconates.

5. Utilisation selon l'une quelconque des revendications 1 à 4, **caractérisée en ce que** l'additif comprend en outre un ou plusieurs composés choisis parmi des glycols et des substances tensioactives.

6. Utilisation selon l'une quelconque des revendications 1 à 5, **caractérisée en ce que** la proportion de polycarboxylatéther et de lignosulfonate dans l'additif aqueux se situe dans la plage de 10 à 80 % en poids.

7. Utilisation selon l'une quelconque des revendications 1 à 6, **caractérisée en ce que** le ciment est un mélange d'au moins une poudre hydraulique et d'une ou plusieurs poudres choisies parmi une poudre non hydraulique, latente hydraulique et pouzzolanique.

8. Utilisation selon l'une quelconque des revendications 1 à 7, **caractérisée en ce que** le ciment comprend une poudre pouzzolanique ou une poudre non hydraulique.

9. Utilisation selon l'une quelconque des revendications 1 à 8, **caractérisée en ce que** le ciment est une sorte de ciment CEM II.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2298710 A1
- EP 2336100 A1
- CN 102603227
- EP 1138697 B1
- EP 1061089 B1
- EP 1348729 A1


### In der Beschreibung aufgeführte Nicht-Patentliteratur


- **MÜLLER et al.** 17. Internationale Baustofftagung ibausil, 23.-26.09.2009, Tagungsberichte Bd. 1, Finger-Institut für Baustoffkunde. *Mahlhilfsmittel auf Polycarboxylatether-Basis für die Zementmahlung,* 87-95
- **HELLER et al.** ZKG International. Bauverlag BV, vol. 64, 40-54
- **DRESSEL et al.** ZKG International. Bauverlag BV, vol. 63cl, 43-54